Europäisches Patentamt

European Patent Office

Office européen des brevets

(11) Veröffentlichungsnummer: **0 235 684**
**B1**

(12) **EUROPÄISCHE PATENTSCHRIFT**

(45) Veröffentlichungstag der Patentschrift: **25.04.90**

(51) Int. Cl.⁵: **B 23 Q 1/20, B 27 B 5/16**

(21) Anmeldenummer: **87102351.1**

(22) Anmeldetag: **19.02.87**

(54) Holzbearbeitungsmaschine.

(30) Priorität: **01.03.86 DE 8605688 u**

(43) Veröffentlichungstag der Anmeldung:
**09.09.87 Patentblatt 87/37**

(45) Bekanntmachung des Hinweises auf die
Patenterteilung:
**25.04.90 Patentblatt 90/17**

(84) Benannte Vertragsstaaten:
**AT BE CH DE FR GB IT LI SE**

(56) Entgegenhaltungen:
**EP-A-0 117 505**
**CH-A- 297 109**
**DE-A-1 947 414**
**US-A-1 748 906**

(73) Patentinhaber: **Josef Scheppach**
**Maschinenfabrik GmbH & Co.**
**Günzburger Strasse 69**
**D-8873 Ichenhausen (DE)**

(72) Erfinder: **Scheppach, Fritz**
**Dr.-Beer-Strasse 5**
**D-8873 Ichenhausen (DE)**

(74) Vertreter: **Munk, Ludwig, Dipl.-Ing.**
**Patentanwalt Prinzregentenstrasse 1**
**D-8900 Augsburg (DE)**

Courier Press, Leamington Spa, England.

**Beschreibung**

Die Erfindung betrifft eine Holzbearbeitungsmaschine, insbesondere eine Kreissäge oder Fräse, mit einem auf einem Gestell aufgenommenen Tisch mit Anbauaggregaten wie einer Tischverbreiterung, einer Schiebeschlittenführung oder dergleichen, und mit mindestens einer im Bereich mindestens einer Tischkante angeordneten Halterung für die mit einer hieran einhängbaren Anbauvorrichtung versehenen, gegenüber dem Tisch ausrichtbaren Anbauaggregate. Bei einer etwa aus dem Dokument EP—A—117505 bekannten Anordnung dieser Art mit einer Halterung für eine Schiebeschlittenführung ist diese mit fest, d.h. unverrückbar angeordneten Befestigungslaschen versehen, die an maschinenseitig verstellbar angeordneten Arbauplatten einhängbar sind. Hierbei ist zwar eine Justierung der anbaubaren Schiebeschlittenführung gegenüber dem Maschinentisch möglich. Diese Justierung erfolgt hierbei jedoch im Bereich der Maschine und nicht des Anbauaggregats. Sofern mehrere Anbauaggregate wahlweise an derselben maschinenseitigen Halterung aufgenommen werden sollen und jedes Anbauaggregat eine andere Justierung verlangt, wovon auszugehen ist, muß bei jedem Anbauvorgang eine Neujustierung durchgeführt werden. Dies erweist sich als umständlich und zeitraubend.

Hiervon ausgehend ist es daher die Aufgabe der vorliegenden Erfindung, eine Anordnung eingangs erwähnter Art unter Vermeidung der geschilderten Nachteile mit einfachen und kostengünstigen Mitteln so zu verbessern, daß die maschinenseitige Halterung mit mehreren Anbauaggregaten wahlweise belegbar ist und daß die Justierung der einzelnen Anbauaggregate dennoch nicht bei jedem Anbauvorgang wiederholt werden muß.

Diese Aufgabe wird erfindungsgemäß dadurch gelöst, daß jede maschinenseitig vorgesehene Halterung unverrückbar angeordnet ist und daß jede anbauaggregatseitig vorgesehene Anbauvorrichtung mindestens einen anbauaggregatseitig unverrückbar fixierten Träger aufweist, auf dem ein mittels einer Stelleinrichtung gegen den Träger verstellbares und mittels einer Halteeinrichtung am Träger lösbar festlegbares, an der maschinenseitigen Halterung einhängbares Einhängeschild aufgenommen ist.

Diese Maßnahmen stellen sicher, daß eine einmal durchgeführte Justierung eines Anbauaggregats beim Austausch dieses Anbauaggregats gegen ein anderes Anbauaggregat erhalten bleibt. Sofern ein Anbauaggregat einmal justiert ist, kann es daher beliebig oft abgenommen und gegen ein anderes Anbauaggregat ausgetauscht werden, ohne daß eine Neujustierung erforderlich ist. Die erfindungsgemäßen Maßnahmen ergeben somit eine hohe Bedienungsfreundlichkeit. Gleichzeitig ist hierbei auch eine hohe Arbeitsgenauigkeit sichergestellt, da nicht zu befürchten ist, daß mit schlecht oder überhaupt nicht justierten Anbauaggregaten gearbeitet wird. Dies wirkt sich in vorteilhafter Weise auch vorteilhaft auf die erzielbare Unfallsicherheit aus.

In vorteilhafter Weiterbildung der übergeordneten Maßnahmen können jeder Träger und das diesem zugeordnete Einhängeschild durch zwei in Richtung einer Stellbewegung gegeneinander versetzte Klemmschrauben lösbar miteinander verbindbar sein, wobei zumindest eines der durch die Klemmschrauben miteinander verbundenen Teile ein der einen Klemmschraube zugeordnetes, in Richtung einer Stellbewegung sich erstreckendes Langloch mit dem Durchmesser der zugeordneten Klemmschraube entsprechender lichter Weise und eine der anderen Klemmschraube zugeordnete, gegenüber dieser nach allen Seiten Übermaß besitzende Ausnehmung aufweist. Diese einfache Ausbildung der Halteeinrichtung ermöglicht eine gegenseitige Translations- und Schwenkbewegung von Träger und Einhängeschild und ermöglicht daher eine exakte Justierung.

Vorteilhaft kann die Stelleinrichtung zwei einen rechten Winkel zwischen sich einschließende, am Träger und am Einhängeschild abgestützte Stellschrauben aufweisen, von denen eine in Längsrichtung des Langlochs und die andere quer hierzu verläuft. Diese Maßnahmen ergeben eine einfache Ausgestaltung der Stelleinrichtung. Die hier vorgesehenen Stellschrauben können in vorteilhafter Weise mit Hilfe einfacher Werkzeuge betätigt werden. Gleichzeitig ermöglicht die hierbei sich ergebende Umsetzung einer Drehbewegung in eine Verschiebebewegung eine sehr feinfühlige Einstellbarkeit.

Eine weitere vorteilhafte Maßnahme kann darin bestehen, daß die untere der übereinander angeordneten Klemmschauben in der zugeordneten Durchsteckausnehmung allseitig Spiel besitzt und daß die Stelleinrichtung im Bereich unterhalb der übereinander angeordneten Klemmschrauben angeordnet ist. Die für eine Schwenkbewegung maßgebende Stellschraube ist hierbei in vorteilhafter Weise weit von der Schwenkachse entfernt, die durch die das Langloch durchgreifende Klemmschraube gebildet wird. Auch diese Maßnahme wirkt sich daher vorteilhalf auf die Erzielbarkeit einer feinfühligen Einstellbarkeit aus. Infolge der Verlegung der Stelleinrichtung an das untere Ende von Träger bzw. Einhängschild ergibt sich zudem eine gute Zugänglichkeit der Stellschrauben.

Gemäß einer weiteren vorteilhaften Ausgestaltung der übergeordneten Maßnahmen kann jeder Träger als Winkelschiene ausgebildet sein, die mit einem Schenkel an einer hierzu parallelen Auflagefläche des zugehörigen Anbauaggregats befestigt ist und deren anderer Schenkel an dem als Platine ausgebildeten Einhängeschild anliegt und auf der von diesem abgewandten Seite mit einem Stützbock versehen ist, an dem die eine Stellschraube, die in eine durch eine Übermaß besitzende Ausnehmung des genannten Schenkels des Trägers hindurch-

greifende, seitliche Auskragung des Einhänge-schilds eingeschraubt ist, mit ihrem Kopf anliegt, und in die die andere Stellschraube eingeschraubt ist, die mit ihrem vorderen Ende an einem am Einhängeschild vorgesehenen Gegenlager anliegt. Hierdurch wird sichergestellt, daß sich nur eine Stellschraube relativ zum Stützbock bewegt, so daß Killisionen der beiden Stellschrauben auch dann ausgeschlossen sind, wenn der Stützbock zur Gewährleistung einer einfachen Bauwerise einfach als auf den zugehörigen Schenkel des Trägers aufgesetzte Winkellachse ausgebildet ist. Das einhängeschildseitige Gegenlager kann zweckmäßig als die maschinenseitige Halterung untergreifende Randabwinklung des platinen-förmig ausgebildeten Einhängeschilds aus-gebildet sein.

Eine weitere vorteilhafte Maßnahme kann darin bestehen, daß die seitliche Auskragung des Einhängeschilds als mit einem quer zu seiner Längsachse verlaufenden Gewindebohrung versehener Bolzen ausgebildet ist, der mit einem in eine Durchsteckausnehmung des Ein-hängeschilds eingreifenden Gewindezapfen ver-sehen und mittels einer hierauf aufschraubbaren Mutter festlegbar ist.

Diese Maßnahmen stellen sicher, daß sich die der Stellschraube zugeordnete Gewindebohrung des Bolzens beim Einschrauben der Gestellschraube vor dem Anzug der dem Bolden zugeordneten Haltemutter von selbst exakt koaxial zur zugeordneten Stellschraube einstellen kann.

In weiterer Fortbildung der übergeordneten Maßnahmen kann das Einhängeschild mit einer nach unten offenen, an einem Tragstift der Halterung einhängbaren Einhängklaue und mit einem zum halterungsseitigen Tragstift parallelen Raststift versehen sein, der in eine im Bereich der Halterung vorgesehene, nach außen offene Kerbung einlegbar und mit einem Gewindezapfen versehen ist, auf den eine mit einem Griff versehene Mutter aufschraubbar ist. Diese Maßnahmen ermöglichen eine einfache Bedienung sowie eine exakte Reduzierbarkeit, da die Anbaugeräte hierbei mit ihren vorzugsweise zwei Einhängklauen einfach in leichter Schwenklage gegenüber dem Maschinentisch einfach von oben zum Eingriff mit den maschinenseitigen Tragstiften gebracht werden können und dann nur noch an die maschinenseitige Halterung angeschwenkt zu werden brauchen, wobei die Raststifte zum Eingriff mit der jeweils zugeordneten Kerbung kommen. Die mit einem Griff versehene Spannmutter ermöglicht eine lösbare Klemmverbindung zur Erzielung einer weiteren Sicherung des jeweils angebrachten Anbauaggregats.

Weitere zweckmäßige Fortbildungen und vorteilhafte Ausgestaltungen der übergeord-neten Maßnahmen ergeben sich aus der nach-stehenden Beschreibung einiger Ausführungs-beispiele anhand der Zeichnung in Verbindung mit den restlichen Unteransprüchen.

In der Zeichnung zeigen:

Figur 1 eine Stirnansicht einer Tischkreissäge mit einer seitlich angebrachten Längsführung für einen Schiebeschlitten,

Figur 2 einen Schnitt entlang der Linie II/II in Figur 1,

Figur 3 einen Schnitt entlang der Linie III/III in Figur 1 und

Figur 4 die andere Stirnansicht einer Tischkreissäge mit einer anstelle der Schlittenlängs-führung in Stellung gebrachten Tisch-verbreiterung.

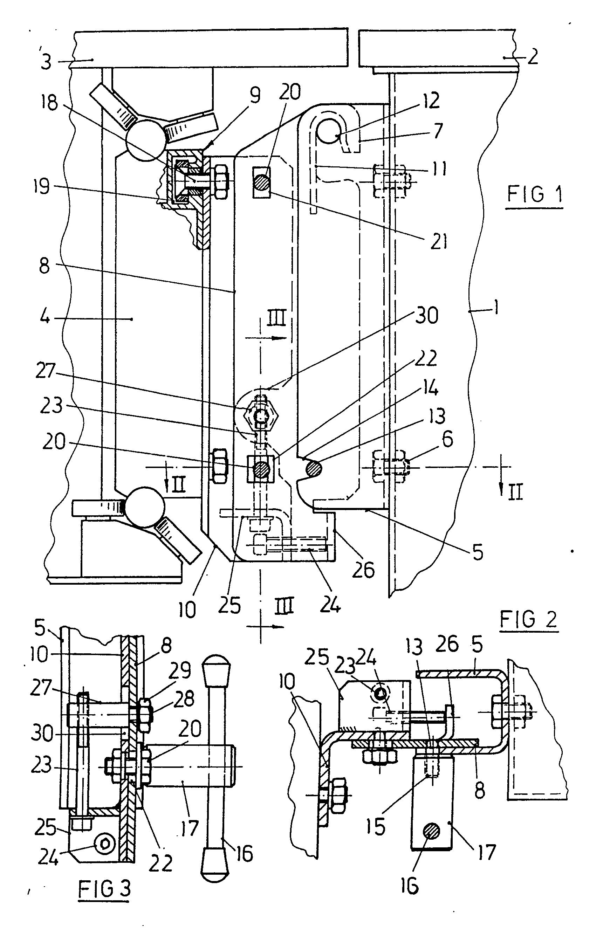

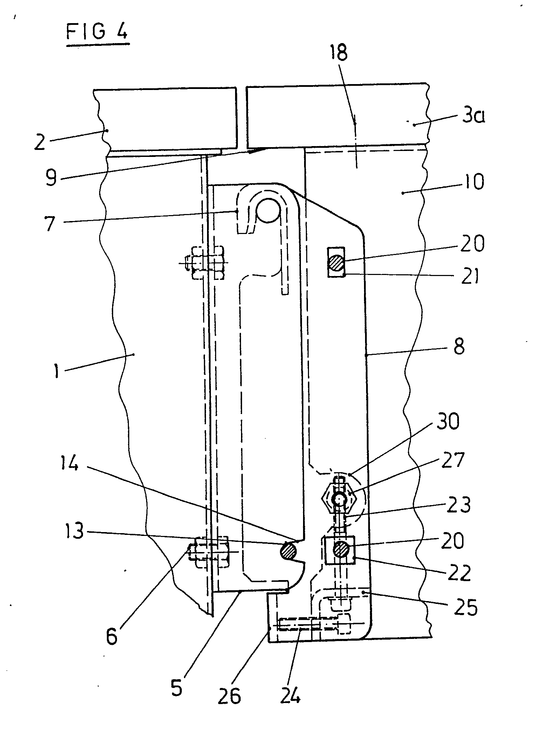

Die den Figuren 1 und 4 zugrundeliegende Kreissäge besteht aus einem auf einem Gestell 1 aufgenommenen Tisch 2, der von einem hier nicht näher dargestellten Sägenblatt durchgriffen wird. In Figur 1 ist neben dem Tisch 2 ein entlang einer Tischlängskante verschiebbarer Schiebeschlitten 3 vorgesehen. Dieser ist auf einer zugeordneten Längsführung 4 aufgenommen, die hier einfach als Kastenprofil ausgebildet ist, auf dem ein oberes und ein unteres Führungsprofil aufgenommen sind. Ein Schiebeschlitten 3 hier vorliegender Art wird in der Regel bei der Durchführung von Ablängarbeiten benötigt. Bei der Anordnung gemäß Figur 4 ist eine anstelle der Schlittenlängsführung 4 in Stellung gebrachte Tischverbreiterung 3a vorgesehen, die die Bearbeitung sehr breiter Werkstücke, wie Platten etc., erleichtern soll. Die Tischverbreiterung 3a stellt im Gegensatz zum Schiebeschlitten 3 ein stationäres Teil dar.

Die Schlittenlängsführung 4 samt Schiebeschlitten 3 und die Tischverbreiterung 3a stellen Anbauaggregate dar, die wahlweise am Gestell 1 in und außer Stellung gebracht werden können. Diese Anbauaggregate sind hierzu mit einer einstellbaren Anbauvorrichtung versehen und können mit dieser am Gestell 1 festgelegt werden. Dieses ist hierzu mit einer im Bereich der anbauseitigen Tischkante angeordneten Halterung versehen, in die die anbauaggregatseitige Anbauvorrichtung einhängbar ist.

Diese Halterung besteht in jedem Falle aus zwei voneinander beabstandeten, durch im Querschnitt U-förmige Schienenabschnitte gebildeten Konsolen 5, die an einer zugeordneten Gestellseitenwand durch Klemmschrauben 6 fest, d. h. unverrückbar, fixiert sind. Die an den wahlweise in Stellung bringbaren Anbauaggregaten, hier in Form der Tischverbreiterung 3a bzw. der Schlittenführung 4, jeweils befestigte Anbauvorrichtung besitzt zwei im Abstand der Konsolen 5 angeordnete, an diesen mittels einer Randklaue 7 einhäangbare, platienförmige Einhängschilde 8, die auf einem jeweils zugeordneten, an einer anbauaggregatseitigen Auflagefläche 9, in Figur 1 in Form einer Seitenflanke des die Längsführung bildenden Kastenprofils und in Figur 4 in Form der Unterseite der Tischverbreiterung 3a, befestigten Träger 10 aufgenommen sind. Die Einhänklaue 7 ist bei den dargestellten Ausführungsbeispielen durch eine nach unten offene Randausnehmung der platinenförmigen Einhängschilde 8 gebildet. Zur Verbreiterung der Auflagefläche ist dabei eine **entsprechend der Randkontur der Ausnehmung** hakenförmig gebogen, seitlich aufgesetzte Lasche 11 vorgesehen. Die Einhängklauen 7 der beiden im Bereich jedes Anbauaggregats vorgesehenen Einhängschilde 8 sind von oben bei gegenüber dem Tisch 3 leicht geschwenkter Haltung des Anbauaggregats in zugeordnete, mit ihren Enden auf den seitlichen Schenkeln der U-förmigen, am Gestell 1 befestigten Konsolen 5 aufgenommene Tragstifte 12 einhängbar. Unterhalb der im Bereich des oberen Rands der Einhängschilde 8 angeordneten Einhängklauen 7 sind die Einhängschilde 8 mit jeweils einem Raststift 13 versehen, dessen Achse parallel zur Achse der Tragstifte 12 und damit zur Achse der die jeweils zugehörige Einhängklaue 7 bildenden Randausnehmung verläuft. Die gestellseitig festgelegten Konsolen 5 besitzen den Raststiften zugeordnete Randkerben 14, in die der jeweils zugeordnete Raststift 13 beim Anschwenken des mit den Einhängklauen 7 an den Tragstiften 12 eingehängten Anbauaggregats an das Gestell 1 einläuft, wodurch sich ein exakter Anschlag sowie eine zuverlässige Sicherung gegen Abheben ergeben. Die anbauaggregatseitigen Einhängschilde 8 liegen in der Montagestellung, wie am besten aus Figur 2 erkennbar ist, an der Innenseite jeweils eines Schenkels der zugeordneten, gestellseitig befestigten Konsole 5 an. Zur Bewerkstelligung einer zusätalichen Stoßsicherung kann daher einfach, wie Figur 2 weiter erkennen läßt, der Raststift 13 des bedienungsseitennahen Einhängschilds 8 mit einem über den zugeordneten Konsolenschenkel vorstehenden Gewindezapten 15 versehen sein, auf den eine mit einem Griff 16 versehene Spannmutter 17 aufschraubbar ist, so daß sich eine zusätzliche Klemmverbindung zwischen der bedienungsseitennahen, gestellseitigen Konsole 5 und dem zugeordneten, hieran anliegenden Einhängschild 8 erreichen läßt.

Die jeweils ein Einhängeschild 8 aufnehmenden Träger 10 sind durch Klemmschrauben 18 am jeweils zugeordneten Anbauaggregat fixiert, d. h. unverräckbar befestigt. Bei der Anordnung gemäß Figur 1 ist das die Schlittenführung 4 bildende Kastenprofil mit den Klemmschrauben 18 zugeordneten, hinterschittenen Kanälen 19 versehen, so daß die Träger 10 und damit die hierauf aufgenommenen Einhängschilde 8 abstandmäßig auf einfache Weise auf die gestellseitigen Konsolen 5 eingerichtet werden können. Im Betrieb sollen die Auflagefläche des Maschinentisches 2 und die Auflagefläche des Schiebeschlittens 3 bzw. der Tischverbreiterung 3a genau miteinander fluchten. Zur Gewährleistung einer genauen Einrichtung der anbauaggregatseitigen Auflagefläche sind daher die Einhängschilde 8 gegenüber dem jeweils zugeordneten Träger 10 verschiebbar und zur Sicherung der richtigen Einstellung lösbar miteinander verspannbar. Die Träger 10 sind in den dargestellten Ausführungsbeispielen als Winkelschienen ausgebildet, deren einer Schenkel durch die Klemmschrauben 18 an der zugeordneten, **anbauaggregatseitigen Anlagefläche 9 befestigt** ist und an dessen anderem Schenkel das jeweils zugehörige Einhängschild 8, das in Form einer Platine ausgebildet ist, flächenhaft anleigt und mittels zweier, übereinander angeordneter Klemmschrauben 20 lösbar festlegbar ist. Zur Durchführung des Einstellvorgangs werden die Klemmschrauben 20 gelockert und nach erfolgter Einstellung angezogen. Um eine gegenseitige Relativbewegung der Einhängschilde 8 gegenüber dem jeweils zugeordneten Träger 10 zu ermöglichen, sind die Einhängschilde 8 mit gegenüber dem Durchmesser der Spannschrauben 20 entsprechendes Verschiebeübermaß aufweisenden Durchsteckausnehmungen versehen. Die der oberen Klemmschraube 20 zugeordnete Durchsteckausnehmung ist in den dargestellten Ausführungsbeispielen als Langloch 21 ausgebildet, dessen Mittellängsebene etwa lotrecht zu der zur Auflagefläche des Tisches 2 fluchtend einzustellenden, anbauaggregatseitigen Auflagefläche verläuft. Die der unteren Klemmschraube 20 zugeordnete Durchsteckausnehmung 22 besitzt gegenüber dem Durchmesser der Klemmschraube 20 nach allen Seiten Übermaß. Diese gestaltung der Durchsteckausnehmungen stellt sicher, daß die Einhängschilde 8 in Längsrichtung des Langloches 21 verschoben, hier also gehoben und gesenkt, und gleichzeitig um die Achse der das Langloch 21 durchgreifenden Klemmschraube 20 geschwenkt werden können, so daß eine exakte Fluchtung der Auflageflächen herbeigeführt werden kann.

Die Einstellung der Einhängschilde 8 gegenüber dem jeweils zugeordneten Träger 10 erfolgt mittels einer jeweils zugeordnete, unterhalb der unteren Klemmschraube 20 angeordneten Stelleinrichtung, die hier zwei rechtwinklig zueinander angeordnete, am Träger 10 bzw. Einhängeschild 8 abgestützte Stellschrauben 23 bzw. 24 aufweist, von denen die eine Stellschraube 23 in der Längsrichtung des Langlochs 21 und die andere, zweckmäßig seitlich hiergegen versetzte Klemmschraube 24 quer hierzu verläuft. Zur trägerseitigen Abstützung der Stellschrauben 23, 24 der vom jeweils zugeordneten Anbauaggregat wegstehende Schenkel des Trägers 10 mit einem Stützbock 25 versehen. Dieser ist als auf die vom zugeordneten Einhängeschild 8 abgewandte Rückseite des vom Anbauaggregat abstehenden, trägerseitigen Schenkels aufgesetzte Winkellachse ausgebildet, deren nach unten verlaufender Schenkel mit einer Gewindebohrung versehen ist, in die die Stellschraube 24 eingeschraubt ist, die mit ihrem vorderen Ende an einem durch eine Randabwinklung des zugeordneten, platinenförmigen Einhängeschilkds 8 gebildeten Gegenlager 26 abgestützt ist. Diese quer zu der die beiden Klemmschrauben 20 enthaltenden Ebene verlaufende Stellschraube 24 ermöglicht die Bewerkstelligung einer Schwenkbewegung um eine hier durch die das Langloch 21 durchgreifende Klemmschraube 20 gebildete Schwenkachse. Der

4

andere, auflageflächenparallel verlaufende Schenkel der den Stützbock 25 bildenden Winkellasche ist mit einem Durchgangsloch für die lottrecht zur Auflagefläche ausgebildete Stellschraube 23 versehen, die mit ihrem Kopf am Stützbock 25 anliegt und mit ihrem Gewindeschaft in eine Gewindebohrung einer seitlichen Auskragung 27 des zugehörigen Einhängeschilds 8 eingreift. Diese ist, wie Figur 3 anschaulich zeigt, als mit einer quer zu seiner Längsachse verlaufenden Gewindebohrung versehener Bolzen ausgebildet, der mittels eines angesetzten Gewindezaptens 28 und einer hierauf aufschraubbaren Mutter 29 am zugehörigen Lagerschild 8 befestigt ist. Im Bereich des die Auskragung 27 bildenden Bolzens ist der am zugehörigen Lagerschild 8 anliegende Schenkel des Trägers 10 mit einer ausreichend Bewegungsspielraum gewährleistenden Randausnehmung 30 versehen.

**Patentansprüche**

1. Holzbearbeitungsmaschine, insbesondere Kreissäge oder Fräse, mit einem auf einem Gestell (1) aufgenommenen Tisch (2) mit Anbauaggregaten wie einer Tischverbreiterung (3a), einer Schiebeschlittenführung (3) oder dergleichen, und mit mindestens einer im Bereich mindestens einer Tischkante angeordneten Halterung (5) für die mit einer hieran einhängbaren Anbauvorrichtung versehenen, gegenüber dem Tisch (2) aufrichtbaren Anbauaggregate, dadurch gekennzeichnet, daß jede maschinenseitig vergesehene Halterung (5) unverrückbar angeordnet ist und daß jede angauaggregatseitig vorgesehene Anbauvorrichtung mindestens einen anbauaggregatseitig unverrückbar fixierten Träger (10) aufweist, auf dem ein mittels einer Stelleinrichtung (23, 24) gegen den Träger verstellbares und mittels einer Halteeinrichtung (20) am träger lösbar festlegbares, an der maschinenseitigen Halterung (5) einhängbares Eionhängeschild (9) aufgenommen ist.

2. Holzbearbeitungsmaschine nach Anspruch 1, dadurch gekennzeichnet, daß jeder Träger (10) und das jeweils zugehörige Einhängeschild (8) durch zwei in Richtung einer Stellbewegung gegeneinander versetzte, vorzugsweise überainander angeordnete Klemmschrauben (20) lösbar miteinander verbindbar sind, wobei zumindest eines der durch die Klemmschrauben (20) miteinander verbundenen Teile ein der einen Klemmschraube (20) zugeordnete, in Richtung einer Stellbewegung sich erstreckendes Langloch (21) mit dem Durchmesser der zugeordneten Klemmschraube entsprechender lichter Weite und eine der anderen Klemmschraube (20) zugeordnete, gegenüber dieser nach allen Seiten Übermaß besitzende Durchsteckausnehmung (22) aufweist.

3. Holzbearbeitungsmaschine nach Anspruch 1, dadurch gekennzeichnet, daß der Träger (10) als Winkelschiene ausgebildet ist, die mit einem Schenkel an einer hierzu parallelen Auflagefläche (9) des zugehörigen Anbauaggregats (3, 4 bzw. 3a) befestigt ist und deren anderer Schenkel an dem als Platine ausgebildeten Einhängeschild (8) anliegt.

4. Holzbearbeitungsmaschine nach einem der vorhergehenden Ansprüche, dadurch gekennzeichnet, daß die Stelleinrichtung zwei vorzugsweise seitlich gegeneinander versetzte, einen rechten Winkel zwischen sich einschließende, am Träger (10) und am Einhängeschild (8) abgestützte Stellschrauben (23, 24) aufweist, von denen eine in der Längsrichtung des Langlochs (21) und die andere quer hierzu verläuft.

5. Holzbearbeitungsmaschine nach einem der vorhergehenden Ansprüche 2 bis 4, dadurch gekennzeichnet, daß die Stelleinrichtung im Bereich unterhalb der vorzugsweise untereinander angeordneten Klemmschrauben (20) angeordnet ist und daß die untere Klemmschraube (20) in der zugeordneten Durchsteckausnehmung (22) allseitig Spiel besitzt.

6. Holzbearbeitungsmaschine nach einem der vorhergehenden Ansprüche 4 bis 5, dadurch gekennzeichnet, daß der vom zugehörigen Anbauaggregat (3, 4 bzw. 3a) wegstehende Schenkel des Trägers (10) auf der vom hieran anliegenden Einhängeschild (8) abgewandten Seite mit einem Stützbock (25) versehen ist, an dem die eine Stellschraube (23), die in eine durch eine Übermaß besitzende Randausnehmung (30) des Trägers (10) hindurchgreifende, seitliche Auskragung (27) des Einhängeschilds (8) eingeschraubt ist, mit ihrem Kopf anliegt und in die die andere Stellschraube (24) eingeschraubt ist, die mit ihrem vorderen Ende an einem, am Einhängeschild (8) vorgesehenen Gegenlager (26) anliegt, wobei die seitliche Auskragung (27) des Einhängeschilds (8) als mit einer quer zu seiner Längsachse verlaufenden Gewindebohrung versehener Bolzen ausbegildet ist, der mit einem in eine Durchsteckausnehmung des Einhängeschilds (8) eingreifenden Gewindezapten (28) versehen und mittels einer hierauf aufschraubbaren Mutter (29) festlegbar ist.

7. Holzbearbeitungsmaschine nach Anspruch 6, dadurch gekennzeichnet, daß der Stützbock (25) als auf den vom zugehörigen Anbauaggregat (3, 4 bzw. 3a) wegstehenden Schenkel des Trägers (10) aufgesetzte Winkellasche ausgebildet ist, dessen einer Schenkel eine Gewindebohrung und dessen anderer Schenkel eine Durchsteckbohrung aufweist und daß das Gegenlager (26) als die maschinenseitige Halterung (5) untergreifende Randabwinklung des Einhängeschilds (8) ausgebildet ist.

8. Holzbearbeitungsmaschine nach einem der vorhergehenden Ansprüche, dadurch gekennzeichnet, daß jedes Einhängeschild (8) mit einer nach unten offenen, an einem Tragstift (12) der gestellseitigen Halterung (5) einhängbaren Randklaue (7) und mit einem zum Tragstift (12) parallelen Raststift (13) versehen ist, der in eine Rankkerbe (14) der gestellseitigen Halterung einlegbar ist, wobei zumindest einer von zwei Raststiften mit einem Gewindezapfen (15) versehen ist, auf den eine mit einem Griff (16) versehene Mitter (17) aufschraubbar ist.

9. Holzbearbeitungsmaschine nach einem der vorhergehenden Ansprüche, dadurch gekennzeichnet, daß das als Platine ausgebildete Einhängeschild (8) im Bereich der Einhängklaue (7) eine seitlich angesetzte, hakenförmige Lasche (11) aufweist.

10. Holzbearbeitungsmaschine nach einem der vorhergehenden Ansprüche, dadurch gekennzeichnet, daß die maschinenseitige Halterung zwei voneinander beabstandete, im Querschnitt vorzugsweise U-förmige Konsolen (5) aufweist, an denen jeweils ein zugeordnetes Einhängeschild (8) einhängbar ist.

**Revendications**

1. Machine a travailler le bois, en particulier scie circulaire ou machine à mortaiser, comprenant un établi (2) supporté par un bâti (1), des agrégats auxiliaires tels qu'un élargissement d'établi (3a), une glissiére de coulisseau (3) ou analogues, et au moins une bride de support (5) disposée dans la zone d'au moins un côté de l'établi, cette bride de support étant destinée à un dispositif auxiliaire qui peut venir s'y accrocher et qui est muni des agrégats auxiliaires pouvant venir s'aligner en face de l'établi (2), caractérisé en ce que chaque bride de support (5) prévue du côté de la machine est montée à demeure, et en ce que chaque dispositif auxiliaire prévu du côté des agrégats auxiliaires présente au moins un support (10) fixé à demeure du côté des agrégats auxiliaires, support sur lequel vient se disposer une plaque d'accrochage (8) pouvant s'accrocher à la bride de support (5) aménagée du côté de la machine, cette plaque pouvant venir s'ajuster contre le support au moyen d'un dispositif de réglage (23, 24) et pouvant venir se fixer de manière amovible contre le support, au moyen d'un dispositif d'arrêt (20).

2. Machine à travailler le bois, selon la revendication 1, caractérise en ce que chaque support (10) et la plaque d'accrochage (8) qui leur est chaque fois attribuée, peuvent être reliés l'un à l'autre de manière amovible à l'intervention de deux vis de serrage (20) disposées en décalage l'une par rapport à l'autre dans le sens d'un mouvement de réglage, ces vis étant, de préférence, disposées l'une dessus l'autre, au moins une des parties reliées l'une à l'autre à l'intervention des vis de serrage (20) presentant un trou oblong (21) attribué à une des vis de serrage et s'étendant dans le sens d'un mouvement de reglage, le diamètre intérieur de ce trou oblong correspondant au diamètre de la vis de serrage qui lui est attribuée, et un évidement traversant (22) attribué à l'autre vis de serrage (20), cet évidement possédant une surmesure de tous les côtés, par rapport à cette vis de serrage.

3. Machine à travailler le bois, selon la revendication 1, caractérisée en ce que le support (10) est réalisé en forme de cornière qui est fixée d'un côté à une des surfaces d'appui (9) correspondante de l'agrégat auxiliaire (3, 4 ou 3A), cette surface d'appui lui étant parallèle, et dont l'autre côté est disposé contre la plaque d'accrochage (8) réalisée en forme de disque.

4. Machine à travailler le bois, selon l'une quelconque des revendications précédentes, caractérisée en ce que le dispositif de réglage présente deux vis de réglage (23, 24) venant s'appuyer contre le support (10) et contre la plaque d'accrochage (8), ces vis formant entre elles un angle droit et étant, de préférence, décalées latéralement l'une par rapport à l'autre, une de ces deux vis s'étendant en direction longitudinale du trou oblong (21) et l'autre s'étendant transversalement par rapport à celui-ci.

5. Machine à travailler le bois, selon l'une quelconque des revendications 2 à 4, caractérisée en ce que le dispositif de réglage est aménagé dans une zone située en-dessous des vis de serrage disposées, de préférence, l'une en-dessous de l'autre, et en ce que la vis de serrage inférieure (20) posséde du jeu de tous les côtés dans l'évidement traversant (22) qui lui est attribué.

6. Machine à travailler le bois, selon l'une quelconque des revendications 4 et 5, caractérisée en ce que le côté du support (10) s'écartant de l'aggregat auxiliaire (3, 4 ou 3A) correspondant est muni d'un tréteau (25) aménage du côté opposé à la plaque d'accrochage (8) adjacente à ce support, tréteau contre lequel vient se disposer la tête de l'une des vis de réglage (23) qui est vissée dans une saillie latérale (27) de la plaque d'accrochage (8) traversant un évidement marginal (30) du support, cet évidement possédant une surmesure, et tréteau dans lequel est vissée l'autre vis de réglage (24) qui vient se disposer avec son extrémité avant contre une butée (26) prévue sur la plaque d'accrochage (8), la saillie latérale (27) de la plaque d'accrochage (8) étant réalisée en forme de boulon muni d'un évidement fileté s'étendant transversalement par rapport à l'axe longitudinal de la plaque (8), ce boulon étant muni d'un tourillon fileté (28) venant s'engrener dans un évidement traversant pratiqué dans la plaque d'accrochage (8) et qui peut être serré au moyen d'un écrou (29) pouvant se visser sur le tourillon.

7. Machine à travailler le bois, selon la revendication 6, caractérisée en ce que le tréteau (25) est réalisé en forme d'une cornière disposée sur le côté du support (10) s'écartant de l'aggrégat auxiliaire (3, 4 ou 3a) qui lui est attribué, un des côtés de cette cornière présentant un alésage fileté et l'autre côté présentant un évidement traversant, et en ce que la butée (26) est réalisée en forme de U marginal de la plaque d'accrochage (8) venant supporter la bride (5) se trouvant du côté de la machine.

8. Machine à travailler le bois, selon l'une quelconque des revendications précédentes, caractérisée en ce que chaque plaque d'accrochage (8) est munie d'une mâchoire marginale (7) ouverte vers le haut et pouvant s'accrocher à une broche de support (12) de la bride (5) disposée du côté du bâti, et d'une broche (13) à cran d'arrêt parallèle à la broche de support (12), cette broche d'arrêt (13) pouvant s'introduire dans une encoche marginale (14) pratiquée dans la bride de support disposée du côté du bâti, une au moins des deux broches à cran d'arrêt étant munie d'un tourillon fileté (15) sur lequel peut venir se visser un écrou (17) muni d'une poignée (16).

9. Machine à travailler le bois, selon l'une quelconque des revendications précédentes, caractérisée en ce que la plaque d'accrochage (8) réalisée en forme de disque présente une bride (11) en forme de crochet, disposée latéralement dans la zone de la mâchoire d'accrochage (7).

10. Machine à travailler le bois, selon l'une quelconque des revendications précédentes, caractérisée en ce que la bride de support disposée du côté de la machine présente deux consoles (5) écartées l'une de l'autre et ayant une section transversale, de préférence, en forme de U, auxquelles peut venir s'accrocher chaque fois une plaque d'accrochage (8) qui lui est attribuée.

**Claims**

1. A woodworking machine, more particularly in the form of a circular saw or router, comprising a table (2) mounted on a frame (1) and having fixtures such as a table widening fixture, a sliding carriage guide or the like, and at least one holder (5), arranged on at least one edge of the table and serving for the fixtures which have a coupling device able to be connected with the holder, and are able to be aligned with the table (2) characterized in that each holder (5) provided on the machine is arranged in an immovable manner and each attachment fitting on the fixture has at least one girder (10) immovably secured to the fixture and this girder mounts a coupling base (8) which is able to be adjusted by means of a setting means (23 and 24) in relation to the girder, is detachably held in place by means of a holding means (20) on the girder and is able to be coupled on the holder (5) which is on the machine.

2. The woodworking machine as claimed in claim 1, characterized in that each girder (10) and the coupling base (8) associated therewith are able to be detachably connected by two preferably superposed clamping screws (20), which are mutually offset in the direction of setting motion, at least one of the parts connected with each other by the clamping screws (20) having a slot (21) for one of the clamping screws (20), which extends in the direction of the setting motion and has a clearance width corresponding to the diameter of the associated clamping screw (20), and a through recess (22), which is associated with the other clamping screw and is made with oversize in relation to same on all sides.

3. The woodworking machine as claimed in claim 1, characterized in that the girder (10) in the form of an angle rail, whose one flange is attached to a support surface (9) parallel thereto, of the associated fixture (3, 4 and, respectively, 3a) and whose other flange bears against the coupling base (8) which is in the form of a plate.

4. The woodworking machine as claimed in any one of the preceding claims, characterized in that setting means has two setting screws (23 and 24) which are preferably laterally mutually offset, have a right angle between them and bear on the girder (10) and on the coupling base (8), and one screw extends in the longitudinal direction of the slot (21) and the other runs transversely in relation thereto.

5. The woodworking machine as claimed in any one of the preceding claims 2 through 4, characterized in that the setting means is arranged in the part underneath the preferably superposed clamping screws (20) and in that the other clamping screw (20) has play on all sides in the associated through opening (22).

6. The woodworking machine as claimed in either of the preceding claims 4 and 5 characterized in that the flange of the girder (10) projecting away from the associated fixture (3, 4 and, respectively, 3a) is provided on the side remote from the coupling base (8) resting thereagainst, with a support ledge (25) against which there bears the head of a setting screw (23), which is screwed into a lateral border (27) of the coupling base (8), such border fitting through a marginal oversize recess (30) of the girder (10), and into which the other setting screw (24) is screwed, which has its front end bearing against an abutment (26) provided on the coupling base (8), the lateral projecting border (27) of the coupling base (8) being in the form of a bolt provided with a threaded hole running transversely to its longitudinal axis, and is provided with a threaded pin (28) fitting into a through recess in the coupling base (8) and being able to be held in place by a nut (29) able to be screwed thereon.

7. The woodworking machine as claimed in claim 6, characterized in that the support ledge (25) is in the form of an angle lug mounted on the flange of the girder (10) projecting away from the associated fixture (3, 4 and, respectively, 3a), the one leg of such lug having a threaded hole and the other leg thereof having a through hole, and in that the abutment (26) is in the form of the holder (5) fitting under the angled border of the coupling base (8).

8. The woodworking machine as claimed in any one of the preceding claims, characterized in that each coupling base (8) is provided with a downwardly open marginal claw (7) able to be coupled with a support pin (12) of the holder (5) on the frame and with a detent pin (13) parallel to the support pin (12), such detent pin being adapted to fit into a marginal notch (14) in the holder on the frame, at least one of two detent pins being provided with a threaded pin (15), onto which a nut (17) provided with a handle (16) may be screwed.

9. The woodworking machine as claimed in any one of the preceding claims, characterized in that the coupling base (8), designed in the form of a plate, has a laterally offset, hook-like lug (11) adjacent to the coupling claw (7).

10. The woodworking machine as claimed in any one of the preceding claims, characterized in that the holder on the machine side has two spaced U-like brackets (5) with a preferably U-like cross section, with which one respective coupling base (8) may be connected.

FIG 1

FIG 2

FIG 3

1

FIG 4